# EUROPEAN PATENT APPLICATION

(11) **EP 4 851 903 A1**
(43) Date of publication of application: **09.12.2026**
(21) Application number: 26182559.0
(22) Date of filing: 02.06.2026
(51) Int. Cl.: G06Q 20/36, G06F 21/62, G06N 20/00, H04L 9/40

(54) **DIGITAL WALLET**

(30) Priority: 05.06.2025 GB 202508868
(71) Applicant: Vodafone Group Services Limited, Newbury, Berkshire RG14 2FN (GB)
(72) Inventor: MEY, Oliver, London, W2 6BY (GB); PETZOLD, Thomas, London, W2 6BY (GB)
(74) Representative: Boult Wade Tennant LLP

(57) **Abstract**

Systems and methods for controlling access to a digital wallet storing a plurality of data elements. A request for access to a data element of the plurality of data elements is received from an AI agent. The request comprises: a data element indicator indicating a data element of the plurality of data elements, for which access is requested; and an intent indicator indicating a task that the AI agent intends to perform with the data element, wherein the intent indicator is generated by the AI agent. It is determined, using the intent indicator, whether to grant access to the data element indicated by the data element indicator. Access provided to the AI agent to the data element indicated by the data element indicator is controlled in dependence on the determination of whether to grant access to the data element.

## Description

### TECHNICAL FIELD

The present disclosure relates to methods and systems for managing access to a digital wallet. The methods and systems disclosed herein may find particular application in managing access to a digital wallet in response to access requests received from one or more Artificial Intelligence (AI) agents.

### BACKGROUND

Artificial Intelligence (AI), particularly generative AI, has seen significant advancements, leading to widespread adoption across various industries and use cases and a rapidly growing user base. Use cases of AI are now extending to personalised digital services and experiences. For example, AI agents are capable of assisting a user with a number of different tasks such as travel planning, online shopping, health management and smart home automation. For example, a user may provide one or more user inputs, for example, in the form of instructions of a task that they would like assistance with. An AI agent may then assist a user with carrying out the task.

The ability of AI agents to perform personalised tasks in the manner intended by a user may be improved by access to data related to the user, which may be referred to as user data or personalised data. User data may be collected, stored and accessed by one or more AI agents, which may improve a service provided by an AI agent. A typical approach to the handling of user data by AI agents includes centralised and cloud based user data collection and storage. Such approaches often involve users granting broad consent to an AI service provider to collect, store and process user data.

Such existing approaches to user data management and use by AI agents presents a number of problems and privacy and security concerns. For example, typical centralised systems often provide little or no user control over their personalised data and users are provided with limited visibility as to how their data is used, for what purpose and how it is shared. It may also be difficult to revoke consent for data usage thereby creating persistent data insecurity. Furthermore, typical consent mechanisms for granting consent for AI agents to access user data are broad and lack granularity. Users are often required to agree to policies which grant sweeping permissions to access user data without a clear understanding of the specific data being collected and accessed or the intended use of such data. Moreover, the use of centralised data storage provides a data security risk since such centralised data repositories are attractive targets for cyber attacks and data breaches. Large-scale data breaches can expose sensitive personal information of millions of users, leading to identity theft, financial loss, and reputational damage. Furthermore, centralized data storage raises concerns about mass surveillance and the potential for misuse of aggregated user data. Typical user data management for AI services also often lack transparency and traceability as to data processing activities of AI agents. For example, it is often difficult to track which data is accessed, when, and for what purpose. This lack of traceability may hinder accountability and make it challenging to verify compliance with privacy policies and user consent.

As described above, there are several limitations to typical methods of collecting, storing and managing access to user data for use by AI services such as AI agents. Such limitations present data security and privacy risks and may limit adoption, use and utility of some AI services.

It is in this context the present disclosure has been devised.

### SUMMARY

It has been realised that data security, privacy, controllability and traceability may all be improved through the use of a digital wallet for storing and managing access to user data. In particular, a digital wallet may be provided for storing data and managing access to that data provided to one or more AI agents. Systems and methods disclosed herein utilise the ability of AI agents to explain their actions and intentions. In particular, systema and methods disclosed herein utilise and indication generated by an AI agent of a task that an AI agent intends to perform with user data. Access to the user data can then be managed in dependence on the AI agent's intent, thereby improving data access controllability, granularity of access controls and traceability of data usage.

According to a first aspect of the present disclosure there is provided a computer implemented method of managing access to a digital wallet, the digital wallet storing a plurality of data elements, and the method comprising: receiving, from an artificial intelligence, AI, agent, a request for access to a data element of the plurality of data elements, wherein the request comprises: a data element indicator indicating a data element of the plurality of data elements, for which access is requested; an intent indicator indicating a task that the AI agent intends to perform with the data element, wherein the intent indicator is generated by the AI agent; determining, using the intent indicator, whether to grant access to the data element indicated by the data element indicator; and controlling access, provided to the AI agent, to the data element indicated by the data element indicator in dependence on the determination of whether to grant access to the data element.

The determining whether to grant access to the data element indicated by the data element indicator may comprise: outputting a user notification to alert a user associated with the digital wallet to the receipt of the request for access to the data element indicated by the data element indicator and providing the intent indicator to the user; receiving a user input in response to the user notification, the user input granting or denying access to the data element indicated by the data element indicator; and determining whether to grant access to the data element indicated by the data element indicator in dependence on the user input.

The determining whether to grant access to the data element indicated by the data element indicator may comprise: determining whether to grant access to the data element in dependence on pre-configured access rights associated with the data element. The pre-configured access rights may be configured for one or more AI agent intent classes.

The method may further comprise outputting a user notification to alert a user associated with the digital wallet if it is determined to grant access to the data element.

The request for access to a data element of the plurality of data elements may further comprise: a reason indicator comprising an indication of a reason that the AI agent needs access to the data element in order to perform the task that the AI agent intends to perform with the data element, wherein the reason indicator is generated by the AI agent. The determining, using the intent indicator, whether to grant access to the data element indicated by the data element indicator may be further performed using the reason indicator.

The method may further comprise authenticating that the request for access to a data element of the plurality of data elements is received from a pre-registered AI agent and only determining to grant access to the data element if the request for access is successfully authenticated as being received from a pre-registered AI agent.

Each of the plurality of data elements may be associated with a sensitivity level from a plurality of sensitivity levels.

Different policies may be applied to different data elements of the plurality of data elements dependent on their associated sensitivity level.

Data elements associated with a first sensitivity level may be stored on a local user device only. Data elements associated with a second sensitivity level may be stored on the local user device and backed up to a cloud based storage.

The determining, using the intent indicator, whether to grant access to the data element indicated by the data element indicator may be further performed in dependence on a sensitivity level associated with the data element.

The method may further comprise: determining, by a classifier, a sensitivity level of a data element of the plurality of data elements; and assigning the determined sensitivity level to the data element in the digital wallet. The classifier may be configured through training to determine a sensitivity level of a data element in dependence on the content of the data element.

The digital wallet may provide an interface for allowing an AI agent to edit a data element of the plurality of data elements and/or add a data element to the plurality of data elements stored in the digital wallet.

The digital wallet may control editing and/or adding to the plurality of data elements in dependence on a sensitivity level associated with the plurality of data elements.

The method may further comprise: monitoring user interactions with an AI agent; detecting a data element included in the monitored user interactions for storage in the digital wallet; and adding the detected data element as a data element of the plurality of data elements in the digital wallet.

The method may further comprise determining, by a classifier, a sensitivity level of the detected data element and assigning the determined sensitivity level to the detected data elements in the digital wallet. The classifier may be configured through training to determine a sensitivity level of a data element in dependence on the content of the data element.

The controlling access to the data element indicated by the data element indicator may comprise sending the data element to the AI agent if it is determined to grant access to the data element.

The controlling access to the data element indicated by the data element indicator may comprise: sending an access token to the AI agent if it is determined to grant access to the data element; and sending the data element to the AI agent upon receipt of a verified access token from the AI agent.

The method may further comprise: monitoring requests for access to data elements of the plurality of data elements and/or access controls granted to an AI agent and storing request for access and/or granted access controls in a log stored in the digital wallet.

The method may further comprise: sending to the AI agent an indication of data fields of the plurality of data elements stored in the digital wallet.

The method may further comprise: receiving from an AI agent a request for an indication of data fields of the plurality of data elements stored in the digital wallet; and sending the indication of data fields of the plurality of data elements stored in the digital wallet in response to the request.

According to a second aspect of the present disclosure there is provided a computer readable medium storing instructions, which when executed, cause a method according to the first aspect to be implemented.

The computer readable medium may be a non-transitory computer readable medium.

According to a third aspect of the present disclosure there is provided a computing system for controlling access to a digital wallet, the digital wallet storing a plurality of data elements, and the computing system being configured to: receive, from an artificial intelligence, AI, agent, a request for access to a data element of the plurality of data elements, wherein the request comprises: a data element indicator indicating a data element of the plurality of data elements, for which access is requested; an intent indicator indicating a task that the AI agent intends to perform with the data element, wherein the intent indicator is generated by the AI agent; determine, using the intent indicator, whether to grant access to the data element indicated by the data element indicator; and control access, provided to the AI agent, to the data element indicated by the data element indicator in dependence on the determination of whether to grant access to the data element.

It will be appreciated from the foregoing disclosure and the following detailed description of the examples that certain features and implementations described as being optional in relation to any given aspect of the disclosure set out above should be understood by the reader as being disclosed also in combination with the other aspects of the present disclosure, where applicable. Similarly, it will be appreciated that any attendant advantages described in relation to any given aspect of the disclosure set out above should be understood by the reader as being disclosed as advantages of the other aspects of the present disclosure, where applicable. That is, the description of optional features and advantages in relation to a specific aspect of the disclosure above is not limiting, and it should be understood that the disclosures of these optional features and advantages are intended to relate to all aspects of the disclosure in combination, where such combination is applicable.

### BRIEF DESCRIPTION OF THE DRAWINGS

Certain examples of the present disclosure will now be described, with reference to the accompanying drawings, in which:
- FIG. 1 is a schematic illustration of an example digital wallet 102;
- FIG. 2 is a schematic illustration of a digital wallet implemented in a hybrid storage comprising a local user device and a cloud based storage;
- FIG. 3 is a flowchart of a method of managing access to a digital wallet;
- FIG. 4 is a schematic representation of an example user notification which may be output at a local user device; and
- FIG. 5 is a schematic illustration of an example electronic device which may be used to implement all or part of any method and/or system described herein.

### DETAILED DESCRIPTION

Hereinafter, examples of the disclosure are described with reference to the accompanying drawings. However, it should be appreciated that the disclosure is not limited to the described examples, and all changes and/or equivalents or replacements thereto also belong to the scope of the disclosure. The same or similar reference denotations may be used to refer to the same or similar elements throughout the specification and the drawings.

As used herein, the terms "have," "may have," "include," or "may include" a feature (e.g., a number, function, operation, or a component such as a part) indicate the existence of the feature and do not exclude the existence of other features. Throughout the description and claims of this specification, the words "comprise" and "contain" and variations of them mean "including but not limited to", and they are not intended to (and do not) exclude other components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

As used herein, the terms "A or B," "at least one of A and/or B," or "one or more of A and/or B" may include all possible combinations of A and B. For example, "A or B," "at least one of A and B," "at least one of A or B" may indicate all of (1) including at least one A, (2) including at least one B, or (3) including at least one A and at least one B.

As used herein, the terms "first" and "second" may modify various components regardless of importance and do not limit the components. These terms are only used to distinguish one component from another. For example, reference to a first component and a second component may indicate different components from each other regardless of the order or importance of the components.

It will be understood that when an element (e.g., a first element) is referred to as being (physically, operatively or communicatively) "coupled with/to," or "connected with/to" another element (e.g., a second element), it can be coupled or connected with/to the other element directly or via a third element. In contrast, it will be understood that when an element (e.g., a first element) is referred to as being "directly coupled with/to" or "directly connected with/to" another element (e.g., a second element), no other element (e.g., a third element) intervenes between the element and the other element.

The terms as used herein are provided merely to describe some embodiments thereof, but not to limit the scope of other embodiments of the disclosure. It is to be understood that the singular forms "a," "'an," and "the" include plural references unless the context clearly dictates otherwise. All terms including technical and scientific terms used herein have the same meaning as commonly understood by one of ordinary skill in the art to which the embodiments of the disclosure belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

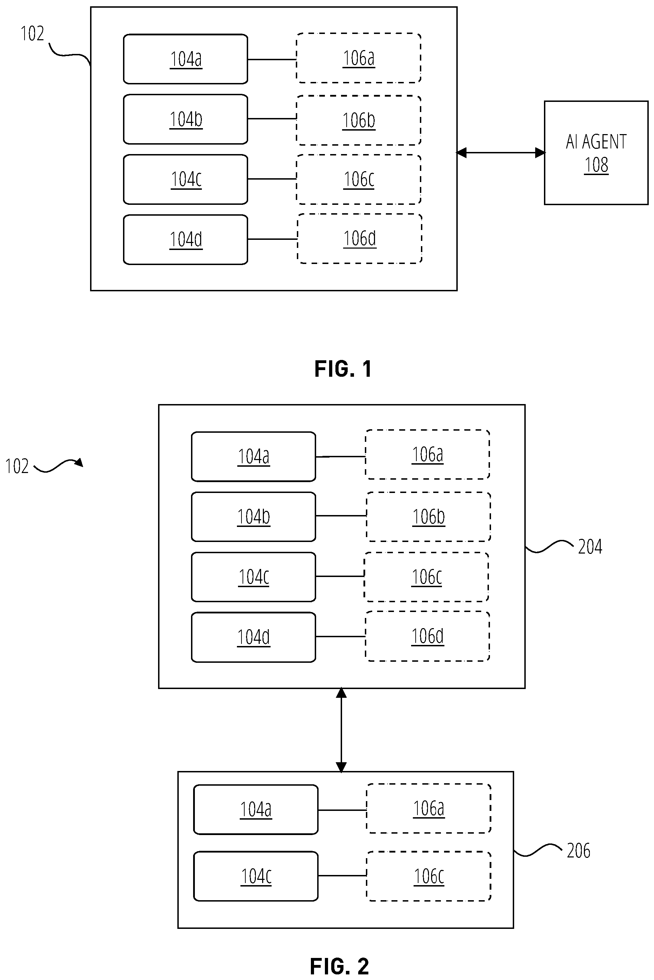

FIG. 1 is a schematic illustration of a digital wallet 102. The digital wallet 102 may be used to store data, such as personal and/or user data. The digital wallet 102 may be associated with a user. For example, the digital wallet 102 may be registered to a particular user account and/or may be stored on and/or registered to a user device. Access to and/or modification of the contents of the digital wallet 102 may be controlled subject to authentication of user credentials.

The digital wallet 102 stores a plurality of data elements 104a - 104d. Purely by way of illustrative example, the digital wallet 102 shown in FIG. 1 is shown as comprising four data elements 104a - 104d. However, it will be appreciated that the digital wallet 102 may include any number of data elements 104a - 104d and may, for example, comprise more than four data elements 104a - 104d.

Whilst functionally, each of the plurality of data elements 104a -104d are stored in the same digital wallet 102, the digital wallet 102 may be implemented by any suitable one or more memory devices (e.g., computer memory). For example, all or part of the digital wallet 102 may be stored locally on a memory included in a user device. Such a user device may, for example, comprise a smart phone, tablet, personal computer or any other suitable form of user device. Additionally or alternatively all or part of the digital wallet 102 may be stored on a cloud based storage. As will be described in further detail below, one or more of the data elements 104a - 104d may be backed up to a cloud based storage.

The data elements 104a - 104d may comprise any suitable data stored in any suitable format. For example, one or more of the data elements 104a - 104d may be stored as structured and/or semi structured data. In at least some examples, one or more of the data element 104a - 104d may comprise a data field and a corresponding data value. For example, a first data element 104a may comprise a data field such as "first name" and a data value such as "Alice". A second data element 104b may comprise a data field such as "last name" and data value such as "Smith". Such data fields and data values may, for example, be stored in a structured or semi-structured format such as a JavaScript Object Notation (JSON) format. Any suitable data fields may be used. Exemplary data fields may, for example, include data fields related to personal details such as name, date of birth, address, contact information etc. Further exemplary data fields may, for example, include data fields related to user preferences such as food, travel, shopping and/or entertainment. Still further exemplary data fields may, for example, include data fields related to health such as dietary restrictions, allergies, fitness data etc. Still further exemplary data fields may, for example, include data fields related to body dimensions such as height, arm length, leg length, waist size etc. Still further exemplary data fields may, for example, include data fields related to professional characteristics such as occupations, skills etc. Still further exemplary data fields may, for example, include data fields related to electronic devices, such as user owned or registered devices, software installed on devices etc. Still further exemplary data fields may, for example, include data fields related to financial characteristics such as payment methods, etc. Still further exemplary data fields may, for example, include data fields related to travel profiles such as frequent flyer programs, seat preferences etc.

Whilst several examples have been provided of data fields, which may be populated with corresponding data values and may, for example, be stored in a structured and/or a semi structured data format, one or more of the data elements 104a -104d stored in the digital wallet 102 may, for example, comprise non-structured data. For example, one or more the data elements 104a - 104d may comprise one or more files such as a portable document format (PDF) file, an image file, a text file etc. One or more files may be stored as data elements 104a - 104d in the digital wallet 102. In at least some examples, one or more files may be referenced in a structured or semi-structured data structure included in the digital wallet 102. For example, the digital wallet 102 may comprise data elements 104a - 104d stored in a JSON data format. A JSON data format may, for example, include one or more fields which include a reference, such as a resource identifier, to a file stored in the digital wallet 102.

In the example shown in FIG. 1, the digital wallet 102 further comprises a plurality of sensitivity levels 106a - 106d. As shown in FIG. 1 (by way of the lines joining the data elements 104a - 104d to the sensitivity levels 106a - 106d), each of the plurality of data elements 104a - 104d may be associated with a sensitivity level 106a - 106d. The sensitivity levels 106a - 106d are sensitive levels from a plurality of different sensitivity levels. For example, there may be a discrete number of possible sensitivity levels from which sensitivity level 106a -106d associated with a data elements 104a - 104d is chosen. Exemplary sensitivity levels 106a - 106d may, for example, comprise a low sensitivity level, a medium sensitivity level and a high sensitivity level.

A low sensitivity level may be associated with data elements 104a - 104d which are generally considered as being non-sensitive and/or where disclosure of such data elements 104a - 104d may be considered to be a relatively lower privacy risk. Examples of data elements 104a - 104d which might be associated with a low privacy level may, for example, comprise data fields such as city of residence and/or preferred brands.

A medium sensitivity level may be associated with data elements 104a - 104d which are generally considered as requiring moderate protection and/or where disclosure of such data elements 104a - 104d may be considered to be a moderate privacy risk. Examples of data elements 104a - 104d which might be associated with a medium sensitivity level may, for example, comprise data fields such as email address, phone number, dietary requirements etc.

A high sensitivity level may be associated with data elements 104a - 104d which are generally considered as requiring a highest level of protection and/or where disclosure of such data elements 104a - 104d may cause significant harm. Examples of data elements 104a - 104d which might be associated with a high sensitivity level may, for example, comprise data fields such as medical conditions, financial account details, biometric data etc.

As will be described in further detail below, different policies may be applied to different data elements 104a - 104d dependent on their associated sensitivity level 106a - 106d. In at least some examples, data elements 104a - 104d with different associated sensitivity levels may have different storage policies associated with them.

FIG. 2 is a schematic illustration of a digital wallet 102 implemented in a hybrid storage comprising a local user device 204 and a cloud based storage 206. As described above the local user device 204 may comprise any suitable user device such as a smart phone, tablet, personal computer or any other suitable form of user device. The local user device 204 may be registered to a user and may, for example, require user credentials such as a user name and password and/or biometric authentication in order to access the device and the data elements 104a - 104d stored upon it. Storing data elements 104a - 104d on the local user device 204 may allow for utilisation of any secure storage capabilities of the local user device 204 (e.g., encrypted file system, secure enclave) to improve data security. Storage on the local user device 204 also provides direct user control of the digital wallet 102 and reduces any reliance on external cloud services for sensitive information.

The cloud based storage 206 may comprise any suitable computer storage which is remote to the local user device 204. For example, the cloud based storage 206 may be implemented on one or more servers. For increased security, the cloud based storage 206 may be implemented using strong security measures. Storing one or more data elements 104a - 104d on the cloud based storage 206 provides data redundancy, and may facilitate cross-device synchronization, and enhance user convenience.

The data elements 104a - 104d and their associated sensitivity levels 106a - 106d stored in the digital wallet 102 in FIG. 2 are the same as the data elements 104a - 104d and sensitivity levels 106a - 106d described above with reference to FIG. 1. As can be seen in FIG. 2, in the illustrated example, all of the data elements 104a - 104d are stored on the local user device 204. A subset of the data elements 104a, 104c are also stored on the cloud based storage 206. For example, a subset of the data elements 104a, 104c may be periodically backed up to the cloud based storage 206.

Which of the data elements 104a - 104d are backed up to the cloud based storage 206 and which of the data elements 104a -104d are stored only on the local user device 204 may be dependent on the sensitivity levels 106a - 106d associated with each of the data elements 104a - 104d. For example, data elements 104a - 104d associated with relatively lower sensitivity levels 106a - 106d (e.g., a low sensitivity level) may be backed up to the cloud based storage 206. Conversely, data elements 104a - 104d associated with relatively higher sensitivity levels 106a - 106d (e.g., a high sensitivity level) may be stored on the local user device 204 only and may not be backed up to the cloud based storage 206. In this way data elements 104a - 104d associated with relatively higher sensitivity levels 106a - 106d (e.g., a high sensitivity level) may be protected from any cyber attacks or security vulnerabilities associated with the cloud based storage 206. In some examples, data elements 104a - 104d associated with a medium sensitivity level may be backed up to the cloud based storage 206. In other examples, data elements 104a - 104d associated with a medium sensitivity level may not be backed up to the cloud based storage 206 and may be stored on the local user device 204 only. In some examples, data elements 104a - 104d associated with a medium sensitivity level may optionally be backed up to the cloud based storage 206 under user control. For example, a user may need to select an option for cloud backup of data elements 104a - 104d associated with a medium sensitivity level

**In** the example shown in FIG. 2 a first data element 104a and a third data element 104c are backed up on the cloud based storage 206, whereas a second data element 104b and a fourth data element 104d are stored on the local user device 204 only. The first data element 104a and the third data element 104c may, for example, be associated with a low sensitivity level sensitivity level 106a, 106c (or medium sensitivity level where medium sensitivity level data elements are backed up to cloud based storage 206). The second data element 104b and the fourth data element 104d may, for example, be associated with a high sensitivity level 106b, 106d (or a medium sensitivity level where medium sensitivity level data elements are not backed up to cloud based storage 206).

**In** general, different storage policies may be applied to different data elements 104a - 104d dependent on their associated sensitivity levels 106a - 106d. Such policies may be used to improve data security of higher sensitivity data elements.

Security of data storage may be improved by storing data elements 104a - 104d in an encrypted format. For example, data elements 104a - 104d stored both on one or both of the local user device 204 and the cloud based storage 206 may be encrypted before storage. Any suitable data encryption may be used such as an Advanced Encryption Standard with a 256-bit key (AES-256). Data element 104a -104d may be encrypted using an encryption key which is derived from a user's device password (e.g., a password used to access the local user device 204) or biometric credentials. The encryption key may be securely managed by keystore implemented on the local user device 204 (e.g., an operating system keystore such as iOS Keychain or Android Keystore). Encryption of the data elements 104a - 104d when stored may ensure that any compromised data elements 104a - 104d remain unintelligible without access to an encryption key which may require access to a user's credentials.

As described above with reference to FIG. 1 and FIG. 2 a plurality of data elements may be stored in a digital wallet 102 and may optionally have sensitivity levels 106a - 106d associated with them. As illustrated in FIG. 1 the digital wallet 102 may be configured to allow for interaction with at least one AI agent 108. For example, an AI agent 108 may request access to one or more data elements 104a - 104d and may, in at least some situations, be granted access to one or more data elements 104a - 104d.

**In** order for an AI agent 108 to be able to access one or more data elements 104a - 104d stored in the digital wallet 102, a registration process may first be performed to register the AI agent 108 with the digital wallet 102. Registration of an AI agent 108 may, for example, comprise a secure key exchange protocol. For example, one or both of the AI agent 108 and the digital wallet 102 may generate a private key and public key pair and send the public key to the other party. The AI agents 108 public key may be stored in the digital wallet 102 for later decryption of communications received from the AI agent 108. Any suitable public-cryptography protocol (e.g., using asymmetric keys) may be used such as an Elliptic-curve Diffie-Hellman (ECDH) key agreement protocol or a Rivest-Shamir-Adleman (RSA) cryptosystem.

**In** order to register an AI agent 108 with the digital wallet 102, a user may be prompted to authorise registration of the AI agent 108. For example, a user notification may be displayed on a user device (e.g., local user device 204) alerting the user to the attempted registration of the AI agent 108 with the digital wallet 102. A user interface may be provided to allow the user to authorise (or otherwise reject) the registration of the AI agent 108 with the digital wallet 102. In at least some examples, a one-time registration and authorisation of an AI agent 108 may be performed for each AI agent 108 and future interactions with an AI agent 108 may simply involve authentication of the AI agent 108 with the digital wallet (e.g., using a public key exchanged during registration).

An AI agent 108 may be assigned a unique agent identifier (ID), for example, in the form of a string or universal unique identifier (UUID). After registration with the digital wallet 102 the unique agent ID and any associated information such as a public key received from the AI agent 108 during registration may be stored in the digital wallet 102. Registration of an AI agent 108 with the digital wallet 102 may ensure that only trusted AI agents 108 can request access to one or more data elements 104a - 104d stored in the digital wallet 102.

An AI agent 108 which registers with the digital wallet 102 and/or which requests access to one or more data elements 104a - 104d stored in the digital wallet 102 may comprise any suitable AI agent 108. For example, the AI agent 108 may comprise a conversational agent, a learning agent, a utility-based agent, a goal-based agent, and/or a multi-agent system. In at least some examples, a plurality of AI agents 108 may register with the digital wallet 102.

**In** at least some examples, an AI agent 108 may interact with a user through an AI services interface. For example, a user may provide one or more inputs (e.g., through a user interface provided on a user device) in the form of instructions for an AI agent 108 to perform. For example, merely by way of illustrative example, a user may input a request for an AI agent 108 to make a booking, transaction or purchase for them. The AI agent 108 may then seek to carry out one or more tasks based on one or more user inputs. Additionally or alternatively, an AI agent 108 may seek to carry out one or more tasks autonomously. One or more tasks to be carried out by an AI agent 108 may be enabled and/or improved by access to one or more data elements 104a - 104d stored in a digital wallet 102.

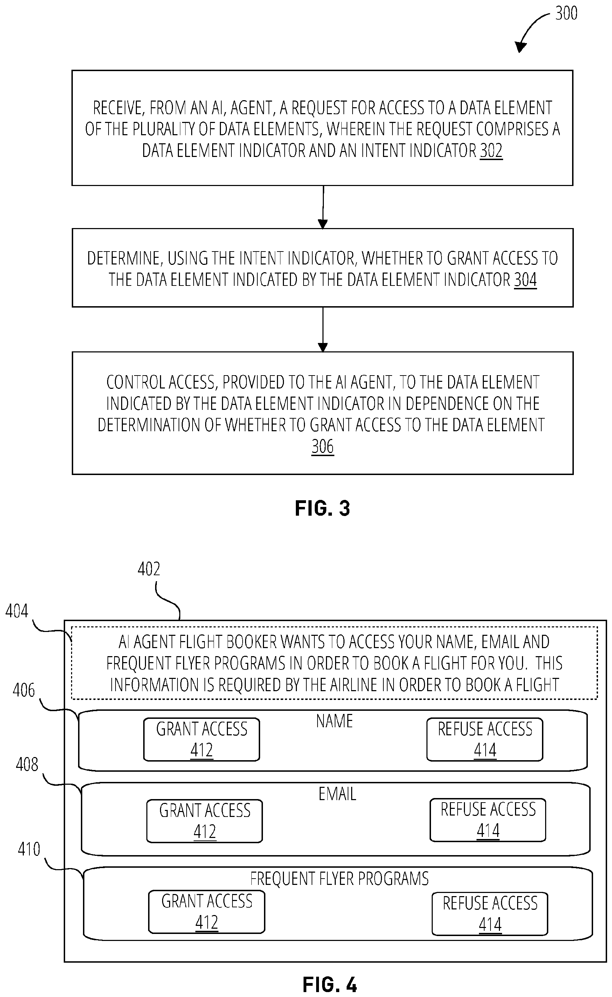

FIG. 3 is a flowchart of a method 300 of managing access to a digital wallet 102. The digital wallet 102 may have any of the features described above with reference to FIG. 1 and FIG. 2. The method 300 may be implemented by using one or more computing devices (and thus the method 300 be a computer implemented method 300). For example, the method 300 may be implemented by a local user device 204 on which a digital wallet 102 is stored. In examples in which a plurality of cooperating computing devices are used, this may be referred to as a computing system.

At step 302 a request for access to a data element 104a - 104d is received from an AI agent 108. For example, the request may be received from an AI agent 108 which is registered with the digital wallet 102 as described above. The request may be received using any suitable communication interface. For example, the request may be received over a network connection (e.g., internet connection). The request may comprise an Application Programming Interface (API) request using a suitable API for communication between the digital wallet 102 and the AI agent 108.

Whilst not shown in the flowchart of FIG. 3, the request received from the AI agent 108 may include at least an aspect which is configured for authenticating itself with the digital wallet 102. Put another way, the digital wallet 102 may authenticate that a request is received from the AI agent 108. For example, the request received from the AI agent 108 may be signed with a private key. The private key may form part of a private key and public key pair, the public key of which was sent to the digital wallet 102 during registration with the digital wallet 102. For example, the public key of the private key and public key pair may be stored in the digital wallet 102. The digital wallet 102 may verify the signature with which the request is signed, using the public key stored in the digital wallet 102. Additionally or alternatively, the digital wallet 102 may verify a unique agent ID to authenticate that the request is received from a registered and approved AI agent 108. If the digital wallet 102 authenticates that the request is received from a registered and approved AI agent 108 then the method 300 may proceed to the subsequent steps described below. If the digital wallet 102 is unable to authenticate that the request is received from a registered and approved AI agent 108 the request may be declined without any further processing. For example, a 401 Unauthorised error response may be sent to the AI agent 108.

The request received at step 302 comprises a data element indicator and an intent indicator. The data element indicator indicates a data element of the plurality of data elements 104a -104d for which access is requested. For example, the data element indicator may comprise a written description of information which is requested (such as, for example, "first name", "surname" etc.). Such a written description may be generated by a language model (e.g., large language model (LLM)) forming at least part of the AI agent 108. Additionally or alternatively, the data element indicator may comprise a pre-configured identifier corresponding to a data element (e.g., a number or code corresponding to a particular data element). The data element indicator may be at least machine-readable. In some examples, the data element indicator may indicate a plurality of data elements of the plurality of data elements 104a -104d for which access is requested. For example, the data element indicator may comprise a list of identifiers each corresponding to a data element for which access is requested.

The intent indicator is generated by the AI agent and indicates a task that the AI agent intends to perform with the data element (the data element for which access is requested). The intent indicator may, for example, comprise a plain language explanation of a task that the AI agent intends to perform with the requested data element. AI agents 108 often implement some form of explainability in that they are capable of generating indications of a task that they are performing and/or a task that they intend to perform with a requested data element. For example, an AI agent 108 may be prompted (e.g., by including a system prompt) to output an explanation of a task that it intends to perform with a requested data element. The intent indicator may be machine-readable to allow the digital wallet 102 to identify the indicated intent. The intent indicator may be human-readable (e.g., correspond with a plain-language explanation) to allow for interpretation by a user. The intent indicator may, for example, be generated by a language model (e.g., LLM) incorporated in the AI agent 108.

**In** at least some examples, the request received at step 302 may further comprise a reason indicator comprising an indication of a reason that the AI agent 108 needs access to the requested data element in order to perform the task that the AI agent intends to perform (the task indicated by the intent indicator) with the requested data element. Similarly, to the intent indicator, the reason indicator may be generated by the AI agent 108. For example the AI agent 108 may be prompted (e.g., by including a system prompt) to output an explanation of a reason why the request data element is required in order perform the task that it intends to perform with a requested data element. The reason indicator may be machine-readable and/or human-readable.

As described above, the request received at step 302 may comprise a unique agent ID corresponding to the AI agent 108 and to allow for identification of the AI agent 108. Additionally or alternatively, the request received at step 302 may be signed with a private key of a public key and private key pair (the public key of which may have been shared with the digital wallet 102).

Whilst not shown in the flow chart of FIG. 3, the AI agent 108 may determine one or more data elements 104a - 104d which are stored in the digital wallet 102 prior to generating a request for access to a data element. For example, the digital wallet 102 may receive a request, from the digital wallet 102 (e.g., prior to the request for access to a data element received at step 302) for an indication of the fields of data elements 104a - 104d, which are stored in the digital wallet 102. The request may, for example, comprise an API request such as a GET data_fields request. In response to such a request the digital wallet 102 may send an indication of data fields for which corresponding data values (corresponding to the data elements 104a - 104d) are stored to the AI agent 108. The digital wallet 102 may only send an indication of the data fields and not the data values or data elements themselves. The AI agent 108 may then use the received indication of data fields stored in the digital wallet 102 on which to base a request for access to a data element (e.g., a request as described above with reference to step 302). For example, the AI agent 108 may select one or more data elements to request access to from the indication of data fields received from the digital wallet 102. A request for an indication of the fields of data elements 104a - 104d, which are stored in the digital wallet 102 may be received from an AI agent 108 after registration of the AI agent 108 with the digital wallet 102. The digital wallet 102 may only send an indication of the fields of data elements 104a - 104d which are stored in the digital wallet 102 to an AI agent 108, which is succesfully registered with the digital wallet 102.

Purely by way of example, an illustrative example of a possible request for access received at step 302 will be described as comprising a unique agent ID, a data element indicator, an intent indicator, and a reason indicator. The data element indicator may comprise a list of data element fields such as "name", "email", "frequent flyer programs". The intent indicator may comprise a machine-readable description of a task that the AI agent 108 intends to perform with the data elements indicated by the data element indicator. For example, the intent indicator may comprise "intent: book flight" to indicate that the AI agent 108 intends to book a flight using the data elements indicated by the data element indicator. The reason indicator may comprise a string describing why the AI agent 108 needs the data elements indicated by the data element indicator in order to perform the intended task indicated by the intent indicator. In this illustrative example, the reason indicator may, for example, comprise a string along the lines of "the airline requires the passengers name, email and frequent flyer details in order to book a flight". It will be appreciated however that the example provided here is merely one illustrative example and many other example forms of request are possible.

At step 304 it is determined, using at least the intent indicator, whether to grant access to the data element indicated by the data element indicator included in the request received at step 302. Whilst not indicated in the flow chart of FIG. 3, as described above, the digital wallet 102 may first authenticate that the request is received at step 302 is received from a trusted AI agent 108. For example, the digital wallet 102 may check that a unique agent ID included in the request corresponds with an agent ID of a registered AI agent 108. Additionally or alternatively, the digital wallet 102 may verify an authentication signature included in the request. For example, the digital wallet 102 may use a public key previously received from the AI agent 108 to verify that the request was signed by a corresponding private key.

The determination of whether to grant access to the data element indicated in the request is performed using at least the intent indicator. In some examples, the determination may be further performed using the reason indicator. In some examples, the determination may be further performed in dependence on a sensitivity level associated with the data element.

In some examples, the determination of whether to grant access to the data element indicated in the request may be automated (e.g., without requiring user input). In particular, automated determinations may be performed for one or more data elements 104a - 104d having a relatively low associated sensitivity level 106a - 106d. For example, one or more data elements 104a - 104d having an associated sensitivity level 106a - 106d comprising a low sensitivity may allow for automated access to the one or more data elements 104a - 104d. One or more data elements 104a - 104d having relatively higher associated sensitivity level 106a - 106d (e.g., a medium or high sensitivity level) may not allow for automated determination of whether to grant access to the data element indicated in the request. For example, as will be described in further detail below, one or more data elements 104a - 104d having relatively higher associated sensitivity levels 106a - 106d (e.g., a medium or high sensitivity level) may require user input in order to determine whether to grant access to such data elements 104a - 104d.

Determining whether to grant access to a data element may be performed in dependence on pre-configured access rights associated with the data element. For example, one or more data elements 104a - 104d may have pre-configured access rights configured for one or more AI agent intent classes. For example, one or more data element 104a - 104d may be configured, in the digital wallet 102, to allow automated access to those data elements 104a -104d for particular pre-configured intents or classes of intent (intent classes). When a request for access to such a data element is received and includes an intent indicator corresponding to an intent class for which access rights have been pre-configured, then an automated determination of whether to grant access to the data element may be performed. For example, a first data element may have pre-configured access rights to allow access to the data elements for intent indicators in a first intent class. If a request for access to the first data element is received with an intent indicator in the first intent class then a determination may be made to grant access to the first data element. Such a determination may be automated and may not require a user input. If a request for access to a data element is received which does not include an intent indicator for which access is pre-configured for that data element then access to such a data element may not be granted without user approval as will be described in further detail below.

Merely to provide an illustrative example, a user may pre-configure to allow for access to data elements related to frequent flyer programs and seat preferences for all intent indicators belonging to an intent class of booking flights. This may be stored as pre-configured access rights for these data elements. Such pre-configured access rights may be configured by a user (e.g., using a user interface for configuring a digital wallet 102) and may be stored in the digital wallet 102. If a request for access to a data element related to frequent flyer programs or seat preferences with an intent indicator falling within an intent class of booking flights is received then an automated determination to grant access to the requested data elements may be made. Such pre-configured access rights may be particularly applicable for frequently used intent classes and/or for data elements having a relatively low associated sensitivity level.

As was described above, in some examples an automated determination of whether to grant access to a data element may be performed. Such an automated determination may, for example, be performed for data elements having a relatively low associated sensitivity level and/or pre-configured access rights for one or more intent classes. Where an automated determination is made, (e.g., without requiring user input) a user notification may be output to alert a user associated with the digital wallet if it is determined to grant access to the data element. For example, a user notification may be output at a local user device 204 to inform a user that access will be/is being granted to one or more data elements. Such a user notification may allow a user to intervene if access to the one or more data elements is not intended or desired by the user.

As was described above, in at least some examples, the determination of whether to grant access to a data element indicated by a data element indicator may be made in dependence on pre-configured access rights. In such examples, the determination is made using the intent indicator because the intent indicator (or at least an intent class to which the intent indicator belongs) is compared to the pre-configured access rights in order to determine whether to grant access.

In some examples, the determining whether to grant access to the data element indicated by the data element indicator included in the request may utilise user input. For example, a user notification may be output to alert a user associated with the digital wallet to the receipt of the request for access to the data element indicated by the data element indicator. The user notification may, for example, be output at a local user device 204 to inform a user that access is being requested to one or more data elements. The user notification may, for example, be output by an application running on a local user device 204, through which the digital wallet 102 can be managed.

The user notification may provide an indication of the one or more data elements 104a - 104d for which access is being requested. The user notification may further provide the intent indicator to the user. For example, the user notification may include an explanation of the task indicated by the intent indicator. In at least some examples, the user notification may further provide a reason indicator to the user. For example, the user notification may include an explanation of the reason indicated by the reason indicator. The user notification may further indicate the AI agent 108 which is requesting access to the one or more data elements 104a - 104d.

FIG. 4 is a schematic representation of an example user notification 402 which may be output at a local user device 204. The user notification 402 may, for example, be displayed on an electronic display forming part of (or in communication with) a local user device 204. The user notification 402 may form part of a graphical user interface. The user notification 402 shown in FIG. 4 is provided merely as an illustrative example and many variations of both the content and form of a user notification are possible.

The user notification 402 shown in FIG. 4 comprises a notification explanation 404 in which text is displayed informing a user of one or more aspects of the received request for access. In the example, shown in FIG. 4 the notification explanation 404 includes the text: "AI agent flight booker wants to access your name, email and frequent flyer programs in order to book a flight for you. This information is required by the airline in order to book a flight". In this example, "AI agent flight booker" comprises an indication of the AI agent 108 which is requesting access to the one or more data elements 104a - 104d. The text "wants to access your name, email and frequent flyer programs" comprise an indication of the one or more data elements 104a - 104d for which access is being requested. The text "in order to book a flight for you" comprises an intent indicator indicating a task which the AI agent 108 intends to carry out using the requested data elements. The text "This information is required by the airline in order to book a flight" comprises a reason indicator indicating a reason that the AI agent needs access to the requested data elements in order to perform the task indicated by the intent indicator.

A user notification may provide one or more options for selection by a user (e.g., as part of a graphical user interface). For example, for each data element 104a - 104d for which access is requested (as indicated by the data element indicator included in the request), at least one option may be presented to a user for selection. The at least one option may, for example, comprise an option to grant access to the data element 104a - 104d for which access is requested (as indicated by the data element indicator included in the request). If a user consents to providing access to a data element 104a - 104d they may select an option presented on a user interface (e.g., a selectable option displayed on a graphical user interface) in order to indicate their consent. The at least one option may, for example, comprise an option to refuse access (i.e., to not grant access) to a data element 104a - 104d. If a user does not consent to providing access to a data element 104a - 104d they may select an option presented on a user interface (e.g., a selectable option displayed on a graphical user interface) in order to indicate their refusal.

Example options, which may be included in a user notification are shown in the user notification 402 of FIG. 4. In particular, a section is provided for a first data element 406 for which access is requested (in the illustrated example, a "name" data element), a section is provided for a second data element 408 for which access is requested (in the illustrated example, an "email" data element) and a section is provided for a third data element 410 for which access is requested (in the illustrated example, a "frequent flyer programs" data element). As can be seen in FIG. 4, for each of the data elements 406, 408, 410, the name of the data element is included along with a first option 412 and a second option 414. The first option 412 and second option 414 may comprise selectable elements in a graphical user interface. That is, for each data element 406, 408, 410 a user may select the first option 412 or the second option 414 through suitable interaction with the graphical user interface. As shown in FIG. 4, in the illustrated example, the first option 412 comprises an option to grant access to the relevant data element 406, 408, 410 and the second option 414 comprises an option to refuse access to the relevant data element 406, 408, 410. The determination of whether to grant access to each data element 406, 408, 410 may be made in dependence on which of the first option 412 and the second option 414 is selected for each data element 406, 408, 410. For example, if a user selects the first option 412 for a data element 406, 408, 410 then it may be determined to grant access to that data element 406, 408, 410. Conversely if a user selects the second option 414 for a data element 406, 408, 410 then it may be determined not to grant access to that data element 406, 408, 410.

In some examples, only a single option per data element may be provided and the determination of whether to grant access to the data element may be made in dependence on whether that option is selected or not. For example, only the first option 412 may be presented to a user to grant access to a data element 406, 408, 410. If the user selects the first option 412 for a data element 406, 408, 410 then it may be determined to grant access to that data element 406, 408, 410. Conversely if a user does not select the first option 412 for a data element 406, 408, 410 (e.g., within a predetermined period of time) then it may be determined not to grant access to that data element 406, 408, 410.

As was described above, in at least some examples, the determination of whether to grant access to a data element indicated by a data element indicator may be made in dependence on a user input. In such examples, the determination is made using the intent indicator because the intent indicator (or at least a representation of the intent indicator) is provided to a user as part of seeking the user input.

The use of the intent indicator in determining whether to grant access to a data element utilises the ability of an AI agent 108 to explain its intended actions, thereby allowing for more control (and more granular control) of access to data elements in the digital wallet 102. Furthermore, the intent indicator may provide greater transparency as to the data being provided to an AI agent and the use of that data. If an AI agent 108 is trusted and pre-registered then the AI agent 108 should only perform tasks with data elements which are consistent with the intent indicator.

Returning again to the method 300 of FIG. 3, at step 306 access provided to the AI agent 108 and to the data element indicated by the data element indicator is controlled in dependence on the determination of whether to grant access to the data element (i.e., the determination made at step 304). If it is determined at step 304 to grant access to a data element, then access may be controlled by granting the AI agent 108 access to the data element. Conversely, if it is not determined at step 304 to grant access to a data element (i.e., it determined to not grant access), then access may be controlled by not granting the AI agent 108 access to the data element.

In some examples, granting an AI agent 108 with access to a data element may comprise, responding to the request received at step 302 with the requested data element included in the response. For example, the requested data element may be embedded in a response sent from the digital wallet 102 to the AI agent 108. The response may, for example, comprise an API response.

In some examples, granting an AI agent 108 with access to a data element may comprise, sending an access token to the AI agent 108. For example, an access token (such as a JSON web token (JWT)) may be generated by the digital wallet 102 and sent to the AI agent 108. An access token may, for example, be embedded in a response (e.g., an API response) sent from the digital wallet 102 to the AI agent 108, in response to the request received at step 302. An access token may be time bound such that it is only valid for a limited time period and expires after that time period. An access token may be valid for a limited number of retrievals of a data element. For example, an access token may provide one-time access to a data element. An access token may be included in a response (e.g., an API response) sent from the digital wallet 102 to the AI agent 108. The response may indicate one or more data elements to which access is granted (with the access token) and/or an indication of the expiry time period of the access token.

In examples in which an access token is generated and provided to an AI agent 108, the AI agent 108 may send a separate access request (e.g., an API request) to the digital wallet 102 which includes the access token. The digital wallet 102 may receive the access token as part of the request and may verify the validity of the access token for the requested data element. If the access token is verified then the digital wallet 102 may send the data element to the AI agent (e.g., in an API response to the separate access request).

It will be appreciated that a method 300 as described above may be performed a plurality of times in order to provide access to a plurality of different data elements. Additionally or alternatively, a method 300 as described above may be performed a plurality times in order to provide access to one or more data elements to a plurality of different AI agents 108.

Methods 300 have been described above in which one or more communications are exchanged between an AI agent 108 and a digital wallet 102. At least some of those communications may include a data element stored in the digital wallet 102 in its payload. In order to provide protection against interception of such communications (and potential compromise of a data element included in a communications) communications exchanged between an AI agent 108 and a digital wallet 102 may be encrypted. For example, Transport Layer Security (TLS) encryption may be used to encrypt one or more communications exchanged between an AI agent 108 and a digital wallet 102.

**In** at least some examples, the digital wallet 102 may maintain a log of access requests received by the digital wallet 102. For example, each time an access is received from an AI agent, an entry may be added to the log stored in the digital wallet 102. An entry in the log may, for example, comprise one or more of a time stamp indicating a time at which access was requested, an agent ID indicating an AI agent 108 from which an access request was received, an intent indicator received from the AI agent 108 and included in the access request, a data element indicator indicating one or more data elements to which access was requested, an outcome of a determination which was made as to whether to grant access to the one or more data elements (e.g., an indication of whether access was granted or refused) and/or an access token which was generated in response to the access request (and optionally any use of that access token). Maintaining a log in the digital wallet 102 may improve transparency and traceability of the data to which access has been requested and/or granted.

A log stored in the digital wallet 102 may take any suitable format. For example, each entry in a log may comprise a JSON object. A log stored in the digital wallet 102 may be encrypted in order to improve data security.

One or more data elements 104a - 104d stored in a digital wallet 102 may be populated in any suitable way. In at least some examples, data elements 104a - 104d stored in a digital wallet 102 may be collected by receiving user inputs. For example, one or more templates may be provided to a user (e.g., through a graphical user interface) comprising data element types to be populated by a user. In at least some examples, a graphical user interface (e.g., provided by an application used to control the digital wallet 102) may be provided to guide a user through inputting one or more data elements for storage in the digital wallet 102.

In at least some examples, at least some of the contents of the digital wallet 102 may be populated through a process of augmentation or automation. For example, a user's interactions with one or more AI agents 108 may be monitored for one or more data elements for storage in the digital wallet 102. For example, user input prompts provided by a user to one or more AI agents 108 may be monitored to detect personal information and/or user preferences provided by the user. Such personal information and/or user preferences may be stored as data elements in the digital wallet 102 for future access by an AI agent 108, thereby preventing a user from being required to enter such data elements each time they are used by an AI agent 108. In some examples, an LLM may be implemented to monitor user interactions with one or more AI agents and to detect data elements included in the monitored interactions for storage in the digital wallet 102.

In some examples, one or more data elements detected in user interactions may be automatically added to the digital wallet 102 without the need for user consent. In some examples, one or data elements detected in user interactions may be suggested to a user for storage in the digital wallet 102. For example, a user notification may be output to a user with one or more suggestions of detected data elements which could be stored in the digital wallet 102. The user notification may, for example, provide one or more selectable options for a user to confirm or refuse storage of a data elements in the digital wallet 102.

In some examples, whether or not a data element requires user confirmation or not for storage in the digital wallet 102 may depend on a sensitivity level associated with the data element. For example, a detected data element associated with a relatively low sensitivity level (e.g., a sensitivity level of low) may be automatically stored in the digital wallet 102 without user confirmation. A detected data element associated with a relatively high sensitivity level (e.g., a sensitivity level of high or medium) may only be stored in the digital wallet 102 upon receiving a user input confirming that the data element should be stored.

In at least some examples, a detected data element having an associated sensitivity level corresponding to a low sensitivity level may be input by a user or suggested and/or stored in the digital wallet 102 through monitoring of user interactions with one or more AI agents. For example, a detected data element having an associated sensitivity level corresponding to a low sensitivity level may be suggested to user for storage in the digital wallet 102 and may be stored in the digital wallet 102 upon user confirmation.

A detected data element having an associated sensitivity level corresponding to a medium sensitivity level may be input by a user or suggested and/or stored in the digital wallet 102 through monitoring of user interactions with one or more AI agents and with explicit user confirmation that the detected data element should be stored in the digital wallet 102. For example, a detected data element having an associated sensitivity level corresponding to a medium sensitivity level may be suggested to user for storage in the digital wallet 102 and may require the presentation of reasoning as to why the detected data element should be stored in the digital wallet 102 upon strong user confirmation.

A detected data element having an associated sensitivity level corresponding to a high sensitivity level may require user input. In at least some examples, detected data element having an associated sensitivity level corresponding to a high sensitivity level may not be suggested to a user for storage in the digital wallet 102 or stored in the digital wallet 102. This may ensured a high level of user awareness and control of the most sensitive information.

In at least some examples, a sensitivity level for associating with a data element may be determined. For example, a classifier may be used to determine a sensitivity levels of a data element. The classifier may be configured through training to determine a sensitivity level of a data element in dependence on the content of the data element. The classifier may comprise any suitable classifier model. The classifier may comprise a relatively light-weight classifier model, which may, for example, be implemented on a user device (e.g., as part of the digital wallet) The classifier model may, for example, be trained using machine learning and based on training data. The classifier model may, for example, comprise a transformer-encoder model. Training data used to train a classifier may, for example, comprise a plurality of data elements each labelled with a suitable sensitivity level. Such training data and labelling may be manually prepared (e.g., a security expert). Additionally or alternatively, a training data may be synthetically generated, for example, using an LLM to generate data. In some examples, a classifier may be trained based on user feedback, for example, using federated learning.

Determination of a sensitivity level for associating with a data element (e.g., using a classifier) may be particularly applicable for data elements detected for potential storage in the digital wallet 102. For example, a data element detected through monitoring user interactions with an AI agent may have an associated sensitivity level determined through use of the classifier. A policy for storing the detected data element in the digital wallet may then be implemented dependent on the determined sensitivity level, as described above.

Additions and/or changes to one or more data elements stored in the digital wallet 102 may be added to a log stored in the digital wallet 102. For example, each time a data element is added to the digital wallet 102 and/or each time a data entry in the digital wallet 102 is changed and entry may be added to the log. An entry in the log may comprise one or more of a time stamp indicating a time at which a data element was added or modified, an agent ID indicating an AI agent which added or modified a data element, a data type indicating a data field of the data element, a data value indicating the contents of the data element which was added or modified, a sensitivity level associated with the data element, and/or proof of a user confirmation for adding or modifying the data element. The log may be stored in the digital wallet 102 and may be encrypted.

Methods have been described herein in which various user interactions may be sought and/or received in order to carry out one or more actions. For example, a user input may be received for granting or refusing access to a data element, for adding or modifying a data element stored in the digital wallet 102 and/or for accessing information stored in the digital wallet 102. In order to improve data security, in at least some examples, biometric authentication may be used to verify the identity of a user providing a user input. For example, the digital wallet 102 may integrate with an operating system's biometric authentication API (e.g, Face ID/Touch ID on iOS and/or FingerprintManager/BiometricPrompt on Android) in order to authenticate the identity of a user. Biometric authentication may be required, for example, unlocking and accessing an application for managing the digital wallet 102. Additionally or alternatively, biometric authentication may be required for granting access to at least some data elements in response to a request for access from an AI agent 108. For example, biometric authentication may be required for granting access to data elements having an associated sensitivity level of medium or high. In some examples, granting access to data elements having an associated sensitivity level of high may additionally or alternatively required multi-factor authentication such as multi-factor biometric authentication.

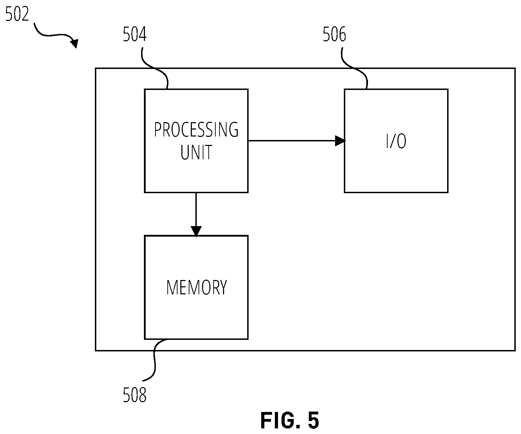

Various methods have been described herein in which at least some of the method steps may be implemented on any suitable electronic device (such as a computing device) and/or combination of electronic devices (e.g. computing devices). FIG. 5 is a schematic illustration of an example electronic device 502 which may be used to implement all or part of any method described herein. For example, one or more electronic devices 502 of the type shown in FIG. 5 and as described below may be used to implement all or part of a method of managing access to a digital wallet as described herein. For example, one or more electronic devices 502 of the type shown in FIG. 5 and as described below may be used to implement all or part of a method 300 as described above with reference to FIG. 3. Additionally or alternatively, one or more electronic devices 502 of the type shown in FIG. 5 may be used to implement a digital wallet and/or an AI agent as described herein.

The electronic device 502 may comprise a computing device. The electronic device 502 may include at least one processing unit 504, memory 508 and an input/output interface 506 (I/O). The processing unit 504 may include any suitable processor and/or combination of processors. For example, the processing unit 504 may include one or more of a Central Processing Unit (CPU) and a Graphical Processing Unit (GPU). The memory 508 may include volatile memory and/or non-volatile/persistent memory. The memory 508 may, for example, be used to store data such as an operating system, instructions to be executed by the processing unit (e.g. in the form of software to be executed by the processing unit), configuration information related to the electronic device 502, and/or a model parameters as described herein. The memory 508 may, for example, be used to store the contents of a digital wallet 102. In some examples, the memory 508 may be used to store instructions for executing any of the methods described herein.

At least the processing unit 504 is connected to the input/output interface 506. The input/output interface 506 may facilitate communication with one or more other devices. For example, the input/output interface 506 may be operable to transmit and/or receive communications to/from other devices in a network. The input/output interface 506 may, for example, comprise one or more antennas to facilitate wireless communication with one or more other devices and/or wired interfaces to facilitate wired communication with one or more other devices.

Optionally, the electronic device 502 may further include a display (not shown). The display may comprise any suitable electronic display such as a touch sensitive display. The display may be connected to at least the processing unit 504. The processing unit 504 may generate display signals which are sent to the display in order to cause the display information.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. In particular, any dependent claims may be combined with any of the independent claims and any of the other dependent claims.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. The claims should not be construed to cover merely the foregoing embodiments, but also any embodiments which fall within the scope of the claims.

## Claims

1. A computer implemented method of managing access to a digital wallet, the digital wallet storing a plurality of data elements, and the method comprising:
receiving, from an artificial intelligence, AI, agent, a request for access to a data element of the plurality of data elements, wherein the request comprises:
a data element indicator indicating a data element of the plurality of data elements, for which access is requested;
an intent indicator indicating a task that the AI agent intends to perform with the data element, wherein the intent indicator is generated by the AI agent;
determining, using the intent indicator, whether to grant access to the data element indicated by the data element indicator; and
controlling access, provided to the AI agent, to the data element indicated by the data element indicator in dependence on the determination of whether to grant access to the data element.

2. The computer implemented method of claim 1, wherein the determining whether to grant access to the data element indicated by the data element indicator comprises:
outputting a user notification to alert a user associated with the digital wallet to the receipt of the request for access to the data element indicated by the data element indicator and providing the intent indicator to the user;
receiving a user input in response to the user notification, the user input granting or denying access to the data element indicated by the data element indicator; and
determining whether to grant access to the data element indicated by the data element indicator in dependence on the user input.

3. The computer implemented method of claim 1 or 2, wherein the determining whether to grant access to the data element indicated by the data element indicator comprises:
determining whether to grant access to the data element in dependence on pre-configured access rights associated with the data element, wherein the pre-configured access rights are configured for one or more AI agent intent classes, wherein the method optionally further comprises outputting a user notification to alert a user associated with the digital wallet if it is determined to grant access to the data element.

4. The computer implemented method of any one of claims 1 to 3, wherein the request for access to a data element of the plurality of data elements further comprises:
a reason indicator comprising an indication of a reason that the AI agent needs access to the data element in order to perform the task that the AI agent intends to perform with the data element, wherein the reason indicator is generated by the AI agent,
wherein the determining, using the intent indicator, whether to grant access to the data element indicated by the data element indicator is further performed using the reason indicator.

5. The computer implemented method of any one of claims 1 to 5, further comprising authenticating that the request for access to a data element of the plurality of data elements is received from a pre-registered AI agent and only determining to grant access to the data element if the request for access is successfully authenticated as being received from a pre-registered AI agent.

6. The computer implemented method of any one of claims 1 to 4, wherein each of the plurality of data elements is associated with a sensitivity level from a plurality of sensitivity levels and, optionally wherein
(a) the determining, using the intent indicator, whether to grant access to the data element indicated by the data element indicator is further performed in dependence on a sensitivity level associated with the data element; and/or
(b) different policies are applied to different data elements of the plurality of data elements dependent on their associated sensitivity level, wherein further optionally data elements associated with a first sensitivity level are stored on a local user device only and wherein data elements associated with a second sensitivity level are stored on the local user device and backed up to a cloud based storage.

7. The computer implemented method of claim 6 , wherein the method further comprises:
determining, by a classifier, a sensitivity level of a data element of the plurality of data elements; and
assigning the determined sensitivity level to the data element in the digital wallet,
wherein the classifier is configured through training to determine a sensitivity level of a data element in dependence on the content of the data element.

8. The computer implemented method of any one of claims 1 to 7, wherein the digital wallet provides an interface for allowing an AI agent to edit a data element of the plurality of data elements and/or add a data element to the plurality of data elements stored in the digital wallet.

9. The computer implemented method of any one of claims 1 to 8, as dependent from any one of claims 6 to 8, wherein the digital wallet controls editing and/or adding to the plurality of data elements in dependence on a sensitivity level associated with the plurality of data elements.

10. The computer implemented method of claim 8 or 9, wherein the method further comprises:
monitoring user interactions with an AI agent;
detecting a data element included in the monitored user interactions for storage in the digital wallet; and
adding the detected data element as a data element of the plurality of data elements in the digital wallet.

11. The computer implemented method of claim 10, wherein the method further comprises determining, by a classifier, a sensitivity level of the detected data element and assigning the determined sensitivity level to the detected data elements in the digital wallet, wherein the classifier is configured through training to determine a sensitivity level of a data element in dependence on the content of the data element.

12. The computer implemented method of any one of claims 1 to 11, wherein the controlling access to the data element indicated by the data element indicator comprises:
sending the data element to the AI agent if it is determined to grant access to the data element, and/or
sending an access token to the AI agent if it is determined to grant access to the data element; and sending the data element to the AI agent upon receipt of a verified access token from the AI agent.

13. The computer implemented method of any one of claims 1 to 12, wherein the method further comprises:
monitoring requests for access to data elements of the plurality of data elements and/or access controls granted to an AI agent and storing request for access and/or granted access controls in a log stored in the digital wallet, and/or
sending to the AI agent an indication of data fields of the plurality of data elements stored in the digital wallet and, optionally, receiving from an AI agent a request for an indication of data fields of the plurality of data elements stored in the digital wallet; and sending the indication of data fields of the plurality of data elements stored in the digital wallet in response to the request.

14. A computer readable medium storing instructions, which when executed, cause a method according to any one of claims 1 to 13 to be implemented.

15. A computing system for controlling access to a digital wallet, the digital wallet storing a plurality of data elements, and the computing system being configured to:
receive, from an artificial intelligence, AI, agent, a request for access to a data element of the plurality of data elements, wherein the request comprises:
a data element indicator indicating a data element of the plurality of data elements, for which access is requested;
an intent indicator indicating a task that the AI agent intends to perform with the data element, wherein the intent indicator is generated by the AI agent;
determine, using the intent indicator, whether to grant access to the data element indicated by the data element indicator; and
control access, provided to the AI agent, to the data element indicated by the data element indicator in dependence on the determination of whether to grant access to the data element.
